# EUROPEAN PATENT APPLICATION

(11) **EP 4 246 022 A1**
(43) Date of publication of application: **20.09.2023**
(21) Application number: 21891089.1
(22) Date of filing: 09.11.2021
(51) Int. Cl.: F16K 1/02

(54) **ELECTRIC VALVE**

(30) Priority: 14.11.2020 CN 202011273556
(71) Applicant: Zhejiang Sanhua Automotive Components Co., Ltd., Hangzhou, Zhejiang 310018 (CN)
(72) Inventor: WANG, Xinnan, Hangzhou Economic & technological Development Area Hangzhou, Zhejiang 310018 (CN); LAN, Yunzhi, Hangzhou Economic & technological Development Area Hangzhou, Zhejiang 310018 (CN); LOU, Jun, Hangzhou Economic & technological Development Area Hangzhou, Zhejiang 310018 (CN); DING, Xinhui, Hangzhou Economic & technological Development Area Hangzhou, Zhejiang 310018 (CN); HAN, Mengjiao, Hangzhou Economic & technological Development Area Hangzhou, Zhejiang 310018 (CN)
(74) Representative: Maikowski & Ninnemann Patentanwälte Partnerschaft mbB
(86) International application number: PCT/CN2021/129517
(87) International publication number: WO 2022/100569

(57) **Abstract**

An electric valve (100), comprising a screw rod (23), a valve core (24), a connecting seat (22), a bearing (27), and a sealing assembly (29). The screw rod (23) is in threaded connection with the valve core (24); the connecting seat (22) is located at the periphery of part of the screw rod (23) and part of the valve core (24); the connecting seat (22) has a first accommodating cavity (223) and a second accommodating cavity (224); the first accommodating cavity (223) and the second accommodating cavity (224) are configured along the same central axis or tending to the central axis; the bearing (27) is located at the periphery of the screw rod (23) and is fixed to the screw rod (23); the bearing (27) is located at the first accommodating cavity (223) and fixed to the connecting seat (22); the sealing assembly (29) is located at the periphery of the valve core (24); the sealing assembly (29) is located at the second accommodating cavity (224); the sealing assembly (29) is pressed between the valve core (24) and the connecting seat (22).

## Description

This application claims priority to Chinese Patent Application No. 202011273556.X, titled "ELECTRIC VALVE", filed on November 14, 2020 with the China National Intellectual Property Administration, which is incorporated herein by reference in its entirety.

### FIELD

The present application relates to an electric valve.

### BACKGROUND

In a vehicle thermal management system, an electric valve is commonly used as a throttling component. The electric valve can throttle the working medium in a forward or reverse flow according to the requirements for different operating modes of the system. It is known by the inventor that an electric valve includes a rotor assembly, a screw rod and a valve core, the rotor assembly is fixedly connected with the screw rod, the screw rod is connected to the valve core in a thread manner, and the rotor assembly drives the valve core to move through the screw rod. It is a technical problem to be improved that how to ensure the coaxiality of the screw rod and the valve core in the process of assembly or movement and further enable the electric valve to operate stably.

### SUMMARY

The object of the present application is to provide an electric valve, which facilitates ensuring the coaxiality of a screw rod and a valve core and further enable the electric valve to operate stably.

In order to achieve the above object, the following technical solutions are provided according to the present application.

An electric valve includes a screw rod, a valve core and a connecting base, the connecting base is arranged at the periphery of part of the screw rod and part of the valve core, the screw rod is connected with the valve core in a thread manner, and the electric valve further includes a bearing and a sealing assembly, the connecting base has a first accommodation cavity and a second accommodation cavity arranged concentrically or substantially concentrically, the bearing is arranged at the periphery of the screw rod and is fixed to the screw rod, the bearing is arranged in the first accommodation cavity and is fixed to the connecting base, the sealing assembly is arranged at the periphery of the valve core, and the sealing assembly is arranged in the second accommodation cavity and is pressed tightly between the valve core and the connecting base.

An electric valve is provided according to the present application. The electric valve includes a screw rod, a valve core, a connecting base, a bearing and a sealing assembly. The screw rod is connected with the valve core in a thread manner, the connecting base is arranged at the periphery of part of the screw rod and part of the valve core, the connecting base has a first accommodation cavity and a second accommodation cavity arranged concentrically or substantially concentrically, the bearing is arranged at the periphery of the screw rod and is fixed to the screw rod, the bearing is arranged in the first accommodation cavity and is fixed to the connecting base, the sealing assembly is arranged at the periphery of the valve core, the sealing assembly is arranged in the second accommodation cavity and is pressed tightly between the valve core and the connecting base. In this way, on the basis of the connecting base, the guiding and positioning of the screw rod by the bearing, the guiding and positioning of the valve core by the sealing assembly, and the guiding of the screw rod and the valve core in a thread manner facilitate ensuring the coaxiality of the screw rod and the valve core in the process of assembly or movement, thereby facilitating enabling the electric valve to operate stably.

### BRIEF DESCRIPTION OF THE DRAWINGS

Figure 1 is a schematic diagram illustrating a cross-sectional structure of an electric valve according to an embodiment;
Figure 2 is a schematic diagram illustrating a cross-sectional structure of a valve component in Figure 1;
Figure 3 is a schematic diagram illustrating a three-dimensional structure of a valve core in Figure 1;
Figure 4 is a schematic diagram illustrating a cross-sectional structure of a connecting base in Figure 1;
Figure 5 is a schematic diagram illustrating a three-dimensional structure of a connecting base in Figure 1;
Figure 6 is a schematic diagram illustrating an exploded structure of a sealing assembly in Figure 1;
Figure 7 is a schematic diagram illustrating a cross-sectional structure of a valve body component in Figure 1;
Figure 8 is a schematic diagram illustrating a partially enlarged structure of a part A in Figure 1.

### DETAILED DESCRIPTION

The application is further described hereinafter in conjunction with accompanying drawing and specific embodiments.

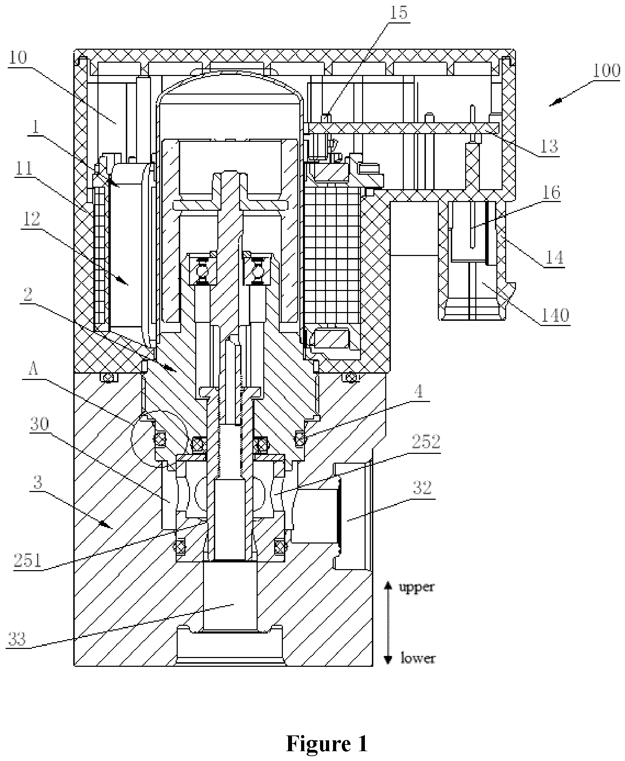

With reference to Figure 1, an electric valve is applicable to a vehicle thermal management system, which includes new energy vehicle thermal management system. An electric valve 100 includes a control component 1, a valve component 2 and a valve body component 3, part of the valve component 2 is arranged in a valve body cavity 30 defined by the valve body component 3, the valve component 2 is connected to the valve body component 3, the control component 1 is arranged at the periphery of the valve component 2, the control component 1 is connected to the valve body component 3, and the electric valve 100 is electrically and/or signally connected with the outside via the control component 1.

With reference to Figure 1, the control component 1 includes an outer casing 11, a stator assembly 12, a circuit board 13, an interface portion 14, a first pin 15 and a second pin 16, the outer casing 11 may be fixed to the interface portion 14 by integrally injection molding or assembling. The stator assembly 12 and the circuit board 13 are arranged in a casing cavity 10 defined by the outer casing 11, the stator assembly 12 is arranged at the periphery of the valve component 2, the stator assembly 12 is electrically and/or signally connected with the circuit board 13 via the first pin 15, the second pin 16 may be fixed to the outer casing 11 by injection molding. In an embodiment, the second pin 16 may be used as an injection molding insert to form the outer casing 11 and the interface portion 14 through integral injection molding. One end of the second pin 16 is arranged in the casing cavity 10 and is electrically and/or signally connected with the circuit board 13, and the other end of the second pin 16 is arranged in a socket cavity 140 defined by the interface portion 14 and is electrically and/or signally connected with the outside. In the present embodiment, the control component 1 and the valve body component 3 are fixedly connected by screws. Of course, in other embodiments, the control component 1 and the valve body component 3 may be fixedly connected by welding, gluing or buckling. Further, an assembly gap between the control component 1 and the valve body component 3 may be sealed, which facilitates preventing water vapor or other media in the outside air from contacting the stator assembly 12 through the assembly gap between the control component 1 and the valve body component 3, causing corrosion or failure of the stator assembly 12.

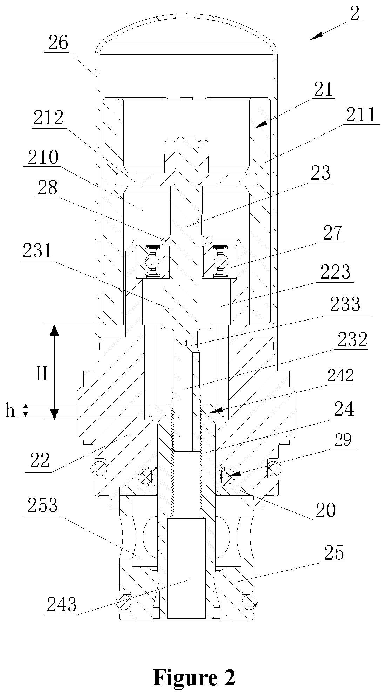

With reference to Figure 1 and Figure 2, the valve component 2 includes a rotor assembly 21, a connecting base 22, a screw rod 23, a valve core 24, a valve core base 25 and a sleeve 26, the rotor assembly 21 is fixedly connected with one end of the screw rod 23, the other end of the screw rod 23 is connected with the valve core 24 in a thread manner, the connecting base 22 is arranged at the periphery of part of the screw rod 23 and part of the valve core 24, the valve core base 25 is arranged at the periphery of another part of the valve core 24, the connecting base 22 is fixedly connected with the valve core base 25, the sleeve 26 is arranged at the periphery of the rotor assembly 21, and the sleeve 26 is fixedly connected with the connecting base 22.

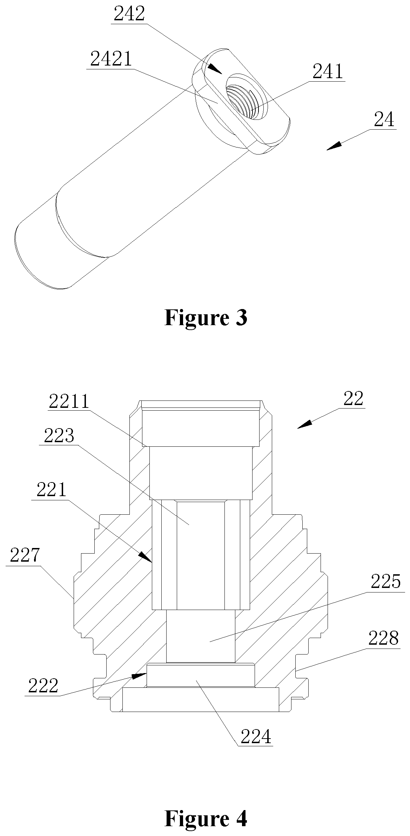

With reference to Figure 2 and Figure 3, the rotor assembly 21 includes a rotor 211 and a fixing member 212, the rotor 211 is fixedly connected with the fixing member 212, and the fixing member 212 is fixedly connected with one end of the screw rod 23. Specifically, in the present embodiment, the rotor 211 may be formed by injection molding with the fixing member 212 being used as an injection molding insert, that is, the rotor 211 is fixed to the fixing member 212 by injection molding, and the fixing member 212 may be fixed to the screw rod 23 by interference fit, welding or gluing or the like. The valve core 24 has a threaded portion 241 provided with an internally threaded segment, and, the other end, connected to the valve core 24, of the screw rod 23 is provided with an externally threaded segment, and, the end, provided with the externally threaded segment, of the screw rod 23 is inserted into a threaded hole defined by the threaded portion 241, such that the screw rod 23 and the valve core 24 are connected in a thread manner by the screw rod 23 engaging with the threaded portion 241.

With reference to Figure. 4, the connecting base 22 includes a first accommodation portion 221 and a second accommodation portion 222, the first accommodation portion 221 defines a first accommodation cavity 223, the second accommodation portion 222 defines a second accommodation cavity 224, the connecting base 22 further has a communication hole 225, the first accommodation cavity 223 and the second accommodation cavity 224 are arranged at two sides of the communication hole 225 respectively in an axial direction of the connecting base 22. The first accommodation cavity 223 and the second accommodation cavity 224 are communicated via the communication hole 225. According to Figure 4, the first accommodation cavity 223 and the second accommodation cavity 224 are arranged concentrically or substantially concentrically. It should be noted that the arrangement substantially concentrically is set under consideration of a processing tolerance.

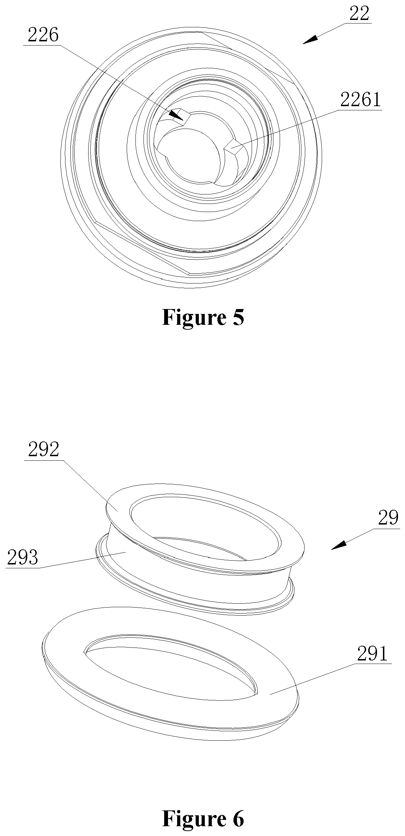

With reference to Figure 2 to Figure 5, part of the screw rod 23 and part of the valve core 24 are arranged in the first accommodation cavity 223, the valve core 24 further includes a limiting portion 242 which is a non-rotating body, the first accommodation portion 221 further includes a matching portion 226, the limiting portion 242 is arranged in the first accommodation cavity 223, the limiting portion 242 matches the matching portion 226 with each other to limit a circumferential rotation of the valve core 24, or prevent a circumferential rotation of the valve core 24. There may be various structures of the limiting portion 242 and the matching portion 226, as long as the valve core 24 can be prevented from rotating in the circumferential direction. In the present embodiment, the limiting portion 242 includes a limiting portion side face 2421. Correspondingly, the matching portion 226 includes a matching portion side face 2261. When the limiting portion 242 matches the matching portion 226, the limiting portion side face 2421 is fitted tightly with the matching portion side face 2261 to prevent the valve core 24 from rotating in the circumferential direction. It should be noted that, in order to enable the valve core 24 to move linearly, a height H of the matching portion 226 is greater than a height h of the limiting portion 242 in an axial direction of the valve component 2. Specifically, a proportional relationship between the height H of the matching portion 226 and the height h of the limiting portion 242 may be designed according to a movement stroke of the valve core 24.

With reference to Figure 2 and Figure 4, the first accommodation portion 221 further includes a first stepped portion 2211, the valve component 2 further includes a bearing 27 and a pressure ring 28, the bearing 27 is arranged at the periphery of the screw rod 23, the bearing 27 is arranged in the first accommodation cavity 223 and is fixedly connected with the connecting base 22, and the bearing 27 abuts against the first stepped portion 2211. In the present embodiment, the bearing 27 is fixed to the connecting base 22 by interference fit. Of course, in other embodiments, the bearing 27 may be fixed to the connecting base 22 by means of welding or gluing or the like. The pressure ring 28 is arranged at the periphery of the screw rod 23, is fixedly connected with the screw rod 23, and is allowed to abut against the bearing 27. Specifically, the pressure ring 28 is allowed to abut against an upper end portion of the bearing 27. In the present embodiment, the pressure ring 28 is fixed to the screw rod 23 by interference fit. Of course, in other embodiments, the pressure ring 28 may be fixed to the screw rod 23 by welding, gluing or buckling or the like. The screw rod 23 further includes a flange portion 231 which is allowed to abut against the bearing 27. Specifically, the flange portion 231 is allowed to abut against a lower end portion of the bearing 27. An end portion, closer to the valve core 24, of the bearing 27 in the axial direction of the valve component 2 is defined as a lower end portion, and an end portion, away from the valve core 24, of the bearing 27 in the axial direction is defined as an upper end portion. In this way, the bearing 27 is arranged between the pressure ring 28 and the flange portion 231, and in a case that the bearing 27 is fixed, the screw rod 23 can be axially limited by the bearing 27 under the action of the pressure ring 28 and the flange portion 231. In addition, in the present embodiment, part of the connecting base 22 and the bearing 27 are also arranged in a rotor cavity 210 defined by the rotor assembly 21, and the bearing 27 is arranged between the fixing member 212 and the valve core 24 in the axial direction of the screw rod 23. In this way, on the one hand, an axial height of the valve component 2 is reduced. On the other hand, the bearing 27 is relatively close to a position at which the screw rod 23 is fixedly connected with the rotor assembly 21, which facilitates reducing the swing of the screw rod 23 during the rotation of the rotor assembly 21 through the bearing 27, thereby facilitating ensuring the coaxiality of the screw rod 23 and the valve core 24.

With reference to Figure 2, Figure 4 and Figure 6, the valve core base 25 is arranged at the periphery of part of the valve core 24, and part of the valve core base 25 is arranged in the second accommodation cavity 224, and the valve core base 25 is fixedly connected with the connecting base 22. Specifically, the valve core base 25 may be fixed to the connecting base 22 by means of interference fit, welding or gluing or the like. The valve component 2 further includes a sealing assembly 29, which is arranged at the periphery of the valve core 24 and is arranged in the second accommodation cavity 224. The sealing assembly 29 is closer to the rotor assembly 21 than the valve core base 25 in the axial direction of the valve component 2, or in other words, the sealing assembly 29 is arranged above the valve core base 25. The sealing assembly 29 includes a first sealing member 291 and a sealing ring 292. The sealing ring 292 may be integrally injection molded. In the present embodiment, the sealing ring 292 is made of polytetrafluoroethylene (PTFE). Of course, in other embodiments, the sealing ring 292 may be made of a mixture of polytetrafluoroethylene and other materials or other plastic materials with both hardness and elasticity. The sealing ring 292 is arranged at the periphery of the valve core 24, the sealing ring 292 is in interference fit with the valve core 24, and the sealing ring 292 is in close contact with an outer surface of the valve core 24 to seal the valve core 24. The sealing ring 292 further includes a first groove portion 293, part of the first sealing member 291 is arranged in a first groove cavity defined by the first groove portion 293, the first sealing member 291 is pressed tightly between the first groove portion 293 and a side wall of the second accommodation portion 222 in a radial direction of the valve component 2. The valve component 2 further includes a retaining ring 20, which is arranged in the second accommodation cavity 224, the retaining ring 20 is arranged between the sealing assembly 29 and the valve core base 25 and is fixedly connected with the connecting base 22. Specifically, the retaining ring 20 may be fixed to the connecting base 22 by means of interference fit, welding or gluing or the like, and the retaining ring 20 is provided to axially limit the sealing assembly 29 to prevent the sealing assembly 29 from moving axially along with the valve core 24, thus facilitating to ensure a sealing performance of the sealing assembly 29.

With reference to Figure 2, the bearing 27 is arranged in the first accommodation cavity 223 of the connecting base 22, the bearing 27 is arranged at the periphery of the screw rod 23, the bearing 27 is in interference fit with the screw rod 23, the bearing 27 is in interference fit with the connecting base 22, the sealing assembly 29 is arranged in the second accommodation cavity 224 of the connecting base 22, the sealing assembly 29 is in interference fit with the valve core 24, and the sealing assembly 29 is pressed between the valve core 24 and a side wall face, defining the second accommodation cavity, of the connecting base 22. In this way, on the basis of the connecting base 22, the guiding and positioning of the screw rod 23 by the bearing 27, the guiding and positioning of the valve core 24 by the sealing assembly 29, and the guiding of the screw rod 23 and the valve core 24 in a thread manner facilitate ensuring the coaxiality of the screw rod 23 and the valve core 24 in the process of assembly or movement and reducing the deviation between the screw rod 23 and the valve core 24 in the process of movement, to enable the electric valve 100 to operate stably. It should be noted that since the bearing 27 and the sealing assembly 29 are respectively arranged in the first accommodation cavity 223 and the second accommodation cavity 224 of the connecting base 22, that is, the bearing 27 and the sealing assembly 29 are guided on the basis of a single component of the connecting base 22, which facilitates reducing a cumulative deviation of a guiding effect between different components, and better ensuring the coaxiality of the screw rod 23 and the valve core 24 in a process of assembly and/or movement. In addition, the matching portion 226 of the connecting base 22 abuts against and fits with the limiting portion 242 of the valve core 24, which facilitates ensuring the coaxiality of the screw rod 23 and the valve core 24 to a certain extent.

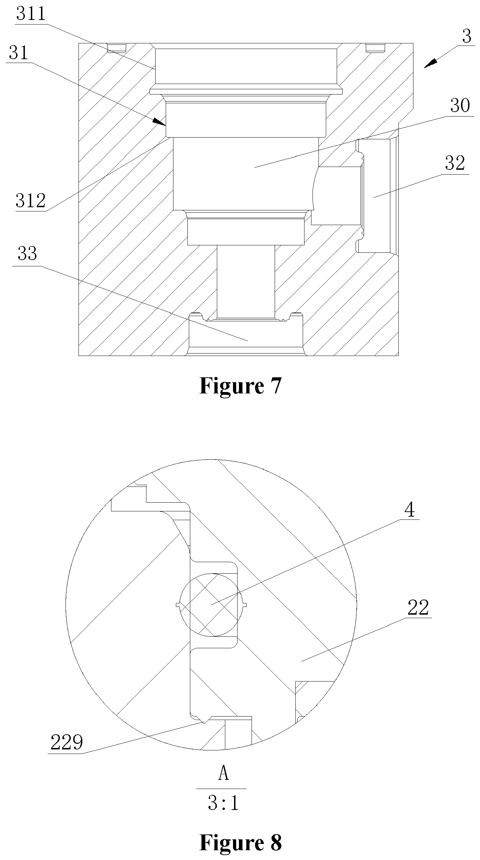

With reference to Figure 1, Figure 2, Figure 4 and Figure 7, the valve body component 3 includes an opening portion 31, and the opening portion 31 defines a valve body cavity 30, the valve body component 3 has a first flow passage 32 and a second flow passage 33. In terms of the valve body component 3, the first flow passage 32 and the second flow passage 33 are communicated via the valve body cavity 30, part of the valve component 2 is arranged in the valve body cavity 30, and the valve component 2 is fixedly connected with the valve body component 3. Specifically, the valve component 2 may be fixed to the valve body component 3 by threaded connection or welding or pressing with a compression nut. In the present embodiment, the connecting base 22 further includes a connecting portion 227, and an external threaded segment is provided on an outer wall of the connecting portion 227, and the opening portion 31 further includes a first side wall 311 on which an internal threaded segment is provided. The valve component 2 is inserted into the valve body cavity 30, and the connecting portion 227 is engaged with the opening portion 31 in a thread manner, such that the valve component 2 is fixed to the valve body component 3. Further, in order to prevent the working medium from leaking outward from the assembly gap between the valve component 2 and the valve body component 3, the assembly gap between the valve component 2 and the valve body component 3 may be sealed. Specifically, the connecting base 22 further includes a second groove portion 228, the electric valve 100 further includes a second sealing member 4, part of the second sealing member 4 is arranged in a second groove cavity defined by the second groove portion 228, and the second sealing member 4 is pressed between the opening portion 31 and the second groove portion 228 in the radial direction of the valve component 2. In the present embodiment, with reference to Figure 8, the connecting base 22 further includes an annular rib 229, the opening portion 31 further includes a second stepped portion 312, and the first side wall 311 is closer to an opening of the opening portion 31 than the second stepped portion 312. In a case that the connecting portion 227 engages with the opening portion 31 in a thread manner, at least part of the rib 229 is pressed and embedded into the second stepped portion 312 to from a hard metal sealing, which forms a double seal with a soft sealing of the second sealing member 4, which further facilitating preventing the working medium from leaking outward from the assembly gap between the valve component 2 and the valve body component 3, thereby enhancing the sealing performance of the electric valve 100. It should be noted that, in order to enable the rib 229 to be pressed and embedded into the second stepped portion 312 to form the hard metal sealing, a hardness of a material of the rib 229 is required to be greater than a hardness of a material of the second stepped portion 312, that is, the hardness of the material of the connecting base 22 is greater than the hardness of the material of the valve body component 3. For example, the connecting base 22 may be made of stainless steel, and the valve body component 3 may be made of aluminum.

With reference to Figure 1 and Figure 2, an operating principle of the electric valve 100 is described as follows. After the control component 1 is energized, the control component 1 generates an excitation magnetic field through the stator assembly 12, the rotor assembly 21 is fixedly connected with the screw rod 23, the rotor assembly 21 drives the screw rod 23 to rotate together under the excitation of the magnetic field of the stator assembly 12, the screw rod 23 is connected with the valve core 24 in a thread manner. The screw rod 23 is axially limited by the bearing 27, and the valve core 24 is circumferentially limited by the connecting base 22. In this way, the valve core 24 can perform axial reciprocating linear movement under the action of threads, and the valve core base 25 has a valve port 251, the valve core 24 can adjust an opening of the valve port 251 by moving closers to or away from the valve port 251 during the axial reciprocating linear movement, thereby a throttling is formed at the valve port 251, and on-off and throttling can be realized for the first flow passage 32 and the second flow passage 33 through the valve port 251. In the present embodiment, an axial linear movement stroke of the valve core 24 is limited by the flange portion 231 of the screw rod 23 and the valve port 251.

With reference to Figure 1 and Figure 2, during the operating of the electric valve 100, in a case that the first flow passage 32 serves as an inlet of the working medium, the second flow passage 33 serves as an outlet of the working medium, and the flow direction of the working medium is defined as forward flow. The high-pressure working medium flows in from the first flow passage 32, passes through a through hole 252 of the valve core base 25 and flows into an inner cavity 253 of the valve core base 25, and becomes a low-pressure working medium to flow out from the second flow passage 33 after throttling through the valve port 251, and flows to a subsequent system circuit. It should be noted that the number of the through hole 252 is at least two, and the at least two through holes are symmetrically distributed, thereby facilitating balancing a radial impact of the high-pressure working medium on the valve core 24 when flowing in from the first flow passage 31, and facilitating a stable operation of the valve core 24. In the present embodiment, the number of the through hole 252 is six and six through holes are distributed symmetrically.

With reference to Figure 1 and Figure 2, in a case that the second flow passage 33 serves as an inlet of the working medium, the first flow passage 32 serves as an outlet of the working medium, the flow direction of the working medium is defined as a reverse flow, and the high-pressure working medium act on a free end of the valve core 24 when flowing in from the second flow passage 33, which generates an upward force in the axial direction on the valve core 24, causing the valve core 24 to close the valve not tightly or to increase the output drive torque of the control component 1. In order to eliminate or mitigate the pressure effect of the high-pressure working medium on the valve core 24 and enable the valve core 24 to operate stably, the electric valve 100 further includes a balance channel. Specifically, in the present embodiment, the valve core 24 further includes a first balance channel 243, the screw rod 23 further includes a second balance channel 232 and at least one balance hole 233, the second flow passage 33 and the second balance channel 232 are communicated via the first balance channel 243, the first accommodation cavity 223 and the second balance channel 232 are communicated via the balance hole 233. When the high-pressure working medium flows in from the second flow passage 33, part of the high-pressure working medium flows through the first balance channel 243 and the second balance channel 232, and then flows into the first accommodation cavity 223 through the balance hole 233, so that the high-pressure working medium is arranged at a back pressure side of the valve core 24, the high-pressure working medium arranged in the first accommodation cavity 223 is sealed by the sealing assembly 29 to avoid contact with the low-pressure working medium arranged in the inner cavity 253 of the valve core base 25, and the high-pressure working medium arranged in the first accommodation cavity 223 acts on the valve core 24, specifically, on the limiting portion 242, which generates an axially downward force on the valve core 24, so that the valve core 24 is subjected to two pressures in opposite directions, which facilitates making the force on the valve core 24 balanced or tend to be balanced, thereby facilitating a stable operation of the valve core 24. In addition, part of the high-pressure working medium becomes the low-pressure working medium after throttling through the valve port 251 and flows into the inner cavity 253, and flows to the first flow passage 32 through the through hole 252, and flows to a subsequent circuit.

It should be noted that the above embodiments are only used to illustrate the present application and not limit the technical solutions described in the present application, for example, the definition of directions such as "front", "rear", "left", "right", "upper", "lower". Although the present application is described in detail in the description with reference to the above embodiments, those skilled in the art should understand that modifications or equivalent replacements can be made to the application by those skilled in the art, and all technical solutions and improvements thereof without deviating from the spirit and scope of the present application shall fall within the scope of the claims of the present application.

## Claims

1. An electric valve, comprising:
a screw rod, a valve core and a connecting base, wherein the connecting base is arranged at a periphery of part of the screw rod and part of the valve core, the screw rod is connected with the valve core in a thread manner, and the electric valve further comprises a bearing and a sealing assembly, the connecting base has a first accommodation cavity and a second accommodation cavity arranged concentrically or substantially concentrically, the bearing is arranged at a periphery of the screw rod and is fixed to the screw rod, the bearing is arranged in the first accommodation cavity and is fixed to the connecting base, the sealing assembly is arranged at a periphery of the valve core, and the sealing assembly is arranged in the second accommodation cavity and is pressed tightly between the valve core and the connecting base.

2. The electric valve according to claim 1, wherein the connecting base comprises a first accommodation portion defining the first accommodation cavity, the first accommodation portion comprises a first stepped portion, and the bearing is in interference fit with the screw rod, abuts against the first stepped portion, and is in interference fit with the first accommodation portion.

3. The electric valve according to claim 2, wherein the connecting base comprises a second accommodation portion defining the second accommodation cavity, the sealing assembly comprises a first sealing member and a sealing ring, the sealing ring comprises a first groove portion, is arranged at the periphery of the valve core and is in interference fit with the valve core, part of the first sealing member is arranged in a first groove cavity defined by the first groove portion, and the first sealing member is pressed tightly between the first groove portion and a side wall of the second accommodation portion.

4. The electric valve according to any one of claims 1 to 3, wherein the electric valve further comprises a rotor assembly defining a rotor cavity, the rotor assembly comprises a fixing member via which the rotor assembly is fixed to the screw rod, and the bearing is arranged in the rotor cavity and is arranged between the fixing member and the valve core in an axial direction of the screw rod.

5. The electric valve according to any one of claims 1 to 3, wherein the first accommodation portion defining the first accommodation cavity comprises a matching portion, the valve core comprises a limiting portion, the limiting portion is a non-rotating body, the matching portion comprises a matching portion side face, the limiting portion comprises a limiting portion side face, the limiting portion is arranged in the first accommodation cavity, the limiting portion side face abuts against the matching portion side face, and the matching portion has a height (H) greater than a height (h) of the limiting portion.

6. The electric valve according to claim 4, wherein the first accommodation portion defining the first accommodation cavity comprises a matching portion, the valve core comprises a limiting portion, the limiting portion is a non-rotating body, the matching portion comprises a matching portion side face, the limiting portion comprises a limiting portion side face, the limiting portion is arranged in the first accommodation cavity, the limiting portion side face abuts against the matching portion side face, and the matching portion has a height (H) greater than a height (h) of the limiting portion.

7. The electric valve according to any one of claims 1 to 3 and 6, wherein the electric valve further comprises a pressure ring, the pressure ring is arranged at the periphery of the screw rod and is fixed to the screw rod, the screw rod comprises a flange portion, the bearing is arranged between the pressure ring and the flange portion in an axial direction of the screw rod, the pressure ring is allowed to abut against an upper end portion of the bearing, the flange portion is allowed to abut against a lower end portion of the bearing, and the screw rod is axially limited by the bearing.

8. The electric valve according to claim 4, wherein the electric valve further comprises a pressure ring, the pressure ring is arranged at the periphery of the screw rod and is fixed to the screw rod, the screw rod comprises a flange portion, the bearing is arranged between the pressure ring and the flange portion in an axial direction of the screw rod, the pressure ring is allowed to abut against an upper end portion of the bearing, the flange portion is allowed to abut against a lower end of the bearing, and the screw rod is axially limited by the bearing.

9. The electric valve according to claim 5, wherein the electric valve further comprises a pressure ring, the pressure ring is arranged at the periphery of the screw rod and is fixed to the screw rod, the screw rod comprises a flange portion, the bearing is arranged between the pressure ring and the flange portion in an axial direction of the screw rod, the pressure ring is allowed to abut against an upper end portion of the bearing, the flange portion is allowed to abut against a lower end of the bearing, and the screw rod is axially limited by the bearing.

10. The electric valve according to any one of claims 1 to 3, wherein the electric valve further comprises a valve core base, the valve core base has a valve port, the valve core base is arranged at the periphery of part of the valve core, part of the valve core base is arranged in the second accommodation cavity, the valve core base is fixedly connected with the connecting base, the sealing assembly is closer to the bearing than the valve core base in an axial direction of the valve core, and the valve core is movable relative to the valve port to adjust an opening of the valve port.

11. The electric valve according to claim 10, wherein the electric valve further comprises a retaining ring, the retaining ring is arranged in the second accommodation cavity and is fixed to the connecting base, the retaining ring is arranged between the sealing assembly and the valve core base in an axial direction of the screw rod, and the sealing assembly is axially limited by the retaining ring and the second accommodation portion of the connecting base.

12. The electric valve according to any one of claims 1 to 3, wherein the electric valve further comprises a valve body component and a second sealing member, the valve body component comprises an opening portion defining a valve body cavity, the connecting base further comprises a second groove portion, part of the connecting base is arranged in the valve body cavity, the connecting base is fixedly connected with the opening portion, part of the second sealing member is arranged in a second groove cavity defined by the second groove portion, and the second sealing member is pressed between the second groove portion and a side wall of the opening portion.

13. The electric valve according to claim 12, wherein the connecting base further comprises a rib, the opening portion comprises a second stepped portion, in a case that the connecting base is fixedly connected with the opening portion, at least part of the rib is pressed and embedded into the second stepped portion, and a hardness of a material of the connecting base is greater than a hardness of a material of the valve body component.

14. The electric valve according to any one of claims 1 to 3, wherein the valve core has a first balance channel, the screw rod has a second balance channel and at least one balance hole, the first balance channel and the balance hole are communicated via the second balance channel, and the balance hole is in communication with the first accommodation cavity.

15. The electric valve according to claim 14, wherein the electric valve further comprises a valve body component, the valve body component has a first flow passage, a second flow passage and a valve port, the valve core is movable closer to or away from the valve port to adjust an opening of the valve port, the first flow passage is communicable with the second flow passage via the valve port, and the first balance channel is in communication with the second flow passage.
